Europäisches Patentamt

European Patent Office

Office européen des brevets

(19)

(11) Publication number: **0 164 525**
**B1**

(12) **EUROPEAN PATENT SPECIFICATION**

(45) Date of publication of patent specification: **05.07.89**

(51) Int. Cl.⁴: **G 21 C 1/00**

(21) Application number: **85104570.8**

(22) Date of filing: **16.04.85**

(54) **Small unitized pressurized water nuclear reactor.**

(30) Priority: **07.05.84 US 607855**

(43) Date of publication of application:
**18.12.85 Bulletin 85/51**

(45) Publication of the grant of the patent:
**05.07.89 Bulletin 89/27**

(84) Designated Contracting States:
**BE DE FR GB SE**

(56) References cited:
**FR-A-1 579 240**
**GB-A-1 049 298**
**GB-A-1 074 345**
**US-A-3 255 088**
**US-A-3 255 089**
**US-A-3 322 641**

(73) Proprietor: **WESTINGHOUSE ELECTRIC CORPORATION**
**Westinghouse Building Gateway Center**
**Pittsburgh Pennsylvania 15222 (US)**

(72) Inventor: **Tower, Stephen Nelson**
**P.O. Box 414**
**Murrysville Pennsylvania 15668 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

EP 0 164 525 B1

Courier Press, Leamington Spa, England.

## Description

The present invention relates to a pressurized water nuclear reactor that is of compact design and is capable of being shop fabricated and shipped to a remote location as an integral unit.

A large potential market exists for small nuclear reactors that can be fabricated as a unit and transported to a given location for use. A major obstacle to the acceptance of small reactors is the relatively high unit cost of small nuclear plants. In order to achieve a reasonable cost advantage, the principal components of the reactor and the nuclear steam supply system should be incorporated into a single pressure vessel. While attempts have previously been made to produce such a reactor, commercial acceptability is lacking.

The basic problem in constructing such a small reactor is to create a compact, space-efficient arrangement of the steam supply system equipment within the restricted confines of a pressure vessel while still preserving the ability to perform in-service inspection and maintenance of the various components without undue difficulty. A further challenge exists in that as many "proven" or high reliability features as possible should be used so as to encourage acceptance of the unit.

Examples of previous constructions of compact pressurized water reactors are given in U.S. Patent 3,150,051 which shows a packaged reactor with an integral superheater and pressurizer and an annular space containing a boiler means; U.S. Patent 3,255,088 which discloses an integral pressurized water reactor with a removable cover and removable heat transfer tube bundles which cooperate with inlet headers and outlet chambers in the side of the reactor vessel, U.S. Patent 3,255,089 which illustrates another design with a different heat transfer means, and U.S. Patent 3,888,734 describes a small reactor that uses an integral steam generator carried by a closure means for the vessel.

British Patent GB—A—1,049,298 also describes a nuclear reactor in which heat exchangers are arranged in an annular space around a central core partition, with mechanical pumps being arranged in communication with the core outlet area so as to receive hot coolant therefrom for pumping the hot reactor core discharge coolant through the heat exchangers.

It is the principal object of the present invention to provide a small reactor system with steam generators arranged directly around the reactor core and so integrated that it is relatively inexpensive to build and also to transport to remote locations and yet reliable in operation.

With this object in view, the present invention resides in a compact unitized pressurized water nuclear reactor comprising a pressure vessel, a core, heat exchangers, pumps and duct structures, wherein the pressure vessel is formed as a hollow cylindrical member having spaced inner and outer walls forming an annular hollow section sealed at the top and bottom thereof, the inner wall of said pressure vessel forming an internal chamber within the vessel; said pressure vessel further having a bottom wall sealing the bottom of said internal chamber; a removable closure means sealing the top of said internal chamber, said top closure means being affixed to the top of said inner wall and extending partially into said internal chamber; the core support means comprising a downwardly extending cylindrical primary coolant baffle positioned within said chamber; and a nuclear core supported within said cylindrical primary coolant baffle at a location spaced from said bottom wall; diametrically opposed dividing walls are arranged between said inner and outer walls and extend upwardly from the bottom; and opposed channel sections extend between said inner and outer walls, and have conduits therein communicating between the top portion of said vessel and the chamber, in the region between said inner wall and said cylindrical primary coolant baffle; said dividing walls and channel sections forming a plurality of vertically extending compartments in said annular hollow section; that a sealing plate extends across each said compartment, so as to seal the top portion of said annular hollow section of each said compartment, the sealing plate having U-shaped heat transfer tubes which depend downwardly therefrom into the compartment; and that a passage is formed in the upper portion of said inner wall to direct primary coolant from said chamber downwardly through hot legs of said heat transfer tubes and upwardly through cold legs thereof, and then to said conduits in the channel sections for return to said chamber, secondary coolant being pumped through said compartments and about said heat transfer tubes, so as to produce steam; said outer wall having steam outlet ports for discharge of said steam from the pressure vessel.

In one embodiment, a pressurizer is formed integral with the pressure vessel, being formed in the upper portion of the annular hollow space, with a separator plate and heating means positioned in the upper portion.

In other embodiments of the present invention, the pressure vessel is formed from upper and lower mating sections, such that the sealing plate and heat transfer tubes may be removed and replaced. To provide for such an embodiment, an enclosure is fitted either over the hot legs of the heat transfer tubes with means to direct primary coolant from the inner chamber through the enclosure and hot legs, or an enclosure is fitted over the cold legs of the heat transfer tubes with means to direct primary coolant from the cold legs to a second enclosure containing a circulating pump, and then through conduit means for return to the chamber. Sealing means are provided for the enclosures to prevent bypass or leakage of the primary coolant from the directed path of flow.

The invention will become more readily apparent from the following description of a preferred embodiment thereof shown, by way of example only, in the accompanying drawings, wherein:

Figure 1 is a vertical cross-section of one embodiment of a pressurized water reactor of the present invention wherein a pressurizer is integral with the pressure vessel, the section taken through one of the channel members and one of the compartments, generally along the lines I—I of Figure 2;

Figure 2 is a horizontal cross-sectional view through the top portion of the pressure vessel illustrated in Figure 1, with some components removed, through both channel members, taken along lines II—II of Figure 1;

Figure 3 is a horizontal cross-sectional view through the reactor illustrated in Figure 1, taken along the lines III—III of Figure 1;

Figure 4 is a plan view of the reactor illustrated in Figure 1, with the steam drums shown, in a containment for the pressure vessel;

Figure 5 is a partial vertical cross-sectional view, similar to Figure 1, of another embodiment of the present invention wherein the pressure vessel is formed of upper and lower mating sections, with an enclosure provided over the hot legs of the heat transfer tubes, and with the pressurizer located outside the pressure vessel;

Figure 6 is a partial vertical sectional view of the hollow annular section of the pressure vessel of Figure 5, looking towards the outer wall of the pressure vessel, and showing a compartment and adjacent channel member;

Figure 7 is a partial vertical cross-sectional view, similar to Figure 1, of a further embodiment of the present invention wherein the pressure vessel is formed of upper and lower mating sections, with an enclosure provided over the cold legs of the heat transfer tubes, and with the pressurizer located outside the pressure vessel;

Figure 8 is a partial horizontal cross-sectional view of the embodiment illustrated in Figure 7 showing a compartment with cold leg enclosure, and an adjacent second enclosure containing a circulating pump and conduit;

Figure 9 is a partial vertical cross-sectional view taken along lines IX—IX of Figure 8;

Figure 10 is a partial cross-sectional view taken along lines X—X of Figure 8, illustrating the sealing rings between the upper and lower matable sections of the pressure vessel; and

Figure 11 is an enlarged view of the area designated XI in Figure 10 illustrating the "J"-type seal weld between the sealing plate segments and walls of the pressure vessel.

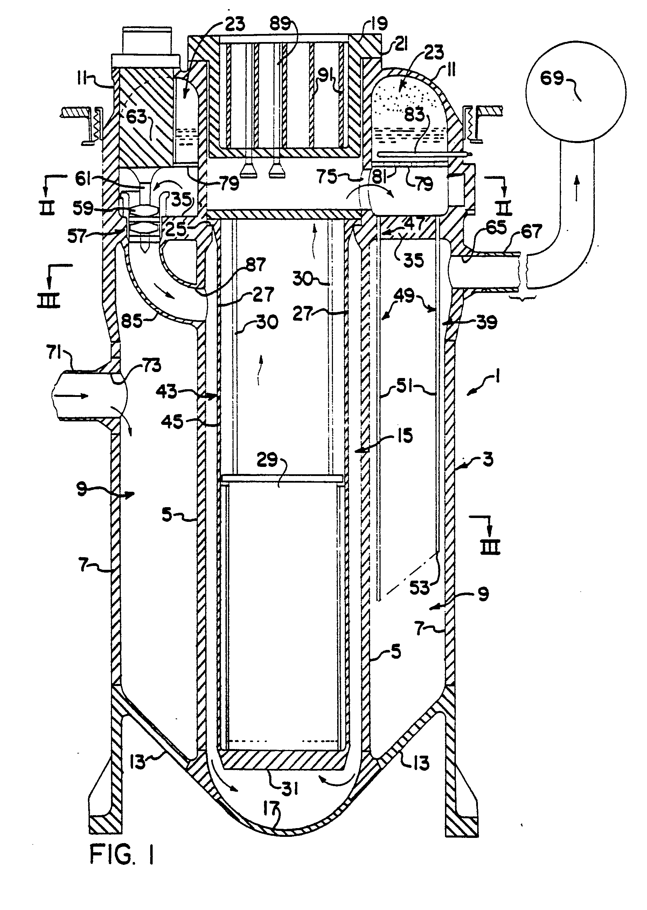

Referring now to Figures 1—4, there is illustrated a small unitized pressurized water reactor 1, which is formed from a hollow cylindrical pressure vessel 3. The hollow cylindrical pressure vessel has an inner wall 5 and a spaced outer wall 7 which forms an annular space 9 therebetween, the annular space 9 being sealed by an annular top wall 11 and an annular bottom wall 13. The inner wall 5 of the pressure vessel 3 forms an internal chamber 15 within the vessel, and a bottom wall 17 seals off the bottom of the chamber 15. At the top of the vessel, a removable closure means 19, such as a deep beam head, seals the inner chamber 15 and is affixed to the inner wall 5 such as by a bolted, gasketed, flanged joint 21. The removable closure means, affixed to the inner wall 5, extends partially into the chamber 15, while an upper open annular space 23 is maintained about the top portion of the pressure vessel 3.

The inner wall 5 has an inwardly extending shoulder 25 near the upper portion thereof, which shoulder 25 positions a core support means, comprising a downwardly depending cylindrical primary coolant baffle 27, within the chamber 15. Supported within the core support means 27 there is a nuclear core 29, the core 29 positioned at a location spaced from the bottom wall 17. An upper reactor internal package, partially illustrated at 30, is also positioned within the chamber 15 above the core 29. A perforated support plate 31, at the bottom of the primary coolant baffle 27, permits the passage of primary coolant therethrough and upwardly through the core 29 within the primary coolant baffle 27.

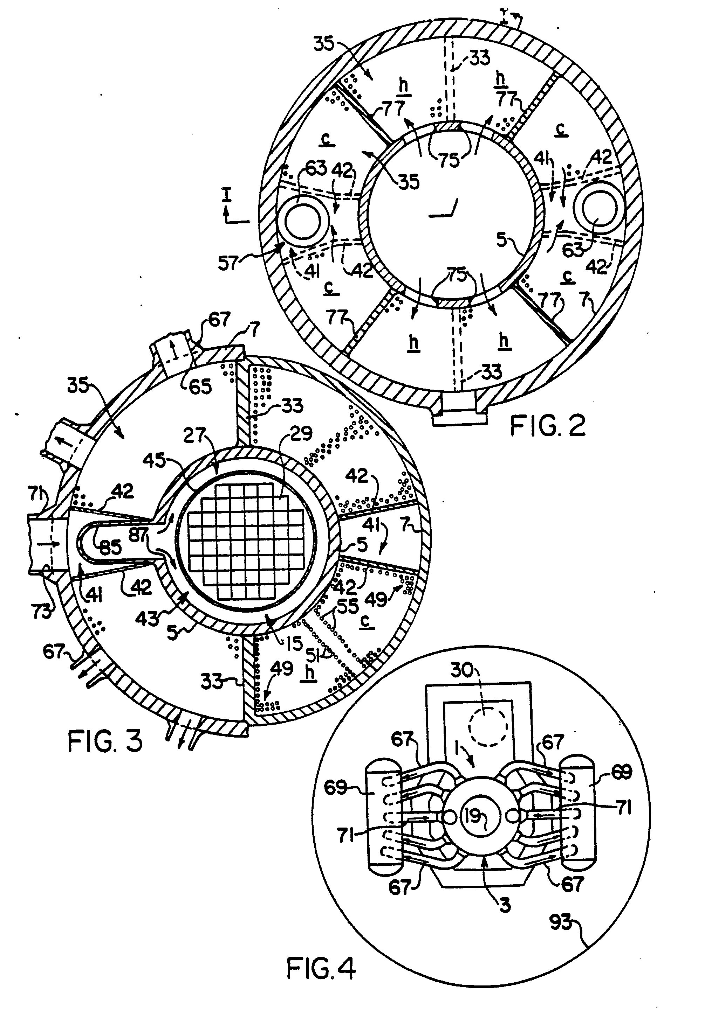

As shown in Figures 2 and 3, opposed dividing walls 33 are provided between the inner wall 5 and the outer wall 7 in the annular space 9. These dividing walls 33 extend upwardly from the annular bottom wall 13, to a location spaced from the top wall 11, and affixed to the top of divider walls 33 is a circular sealing plate 35. The circular sealing plate 35 extends about the pressure vessel 3 and seals the upper portion 23 of the annular space 9 from the lower portion 39 thereof (Figures 1 and 2). Opposed channel members 41, comprised of spaced walls 42, are also provided between the inner and outer walls 5 and 7, such that the divider walls 33 and channel members 41 form a plurality of compartments 10 in the lower portion 39 of the annular space 9. The walls 42 of the channel members also extend from the annular bottom wall 13 to the circular sealing plate 35, and have perforations in the lower portion for flow of secondary coolant therethrough. Conduit means 85, at the upper area of the channel members 41, communicate between the upper portion 23 of the annular space 9 and the region 43 between the inner wall 5 of the pressure vessel 3 and the outer surface 45 of the primary coolant baffle 27.

The sealing plate 35, in the area between each dividing wall 33 and the channel member 41 has a plurality of apertures 47 therethrough in which there are placed an array of U-shaped heat transfer tubes 49, such that those portions of the sealing plate act as a tube sheet. The U-shaped heat transfer tubes have downwardly extending hot leg portions 51, connecting U-bend portions 53, and upwardly extending cold leg portions 55, which extend into the lower portion 39 of the annular space 9. The sealing plate 35, above channel members 41, contains a circular opening 57 that leads to conduit 85. An axial impeller 59, attached to a shaft 61 of pump motor 63, extends into the circular opening 57 so as to direct primary fluid from the upper portion 23 of annular space 9 downwardly through the conduit 85. Steam outlet ports 65 are provided in the outer wall 7 in the area of the lower portion 39 of annular space 9 in the compartments containing the heat transfer tubes 49, which steam outlet ports lead to riser conduits 67 attached to a pair of steam drums 69, while a downcomer 71 leads from the steam drums 69 back to the annular space 9, between the walls 42 of channel members 41, through inlet ports 73 in outer wall 7.

Passage means 75, such as transfer ports, are formed in the inner wall 5 of the pressure vessel 3 at the upper portion thereof, and a series of partitions 77 extend upwardly from the sealing plate 35 into the upper portion 23 of the annular space 9. A horizontal separation plate 79 also extends about the annular space 9, in the upper portion 23, positioned above the passages 75, the separation plate 79 having apertures 81 therethrough in areas of flow of hot primary coolant. Above the separator plate 79, and within the upper open annular space 23, there are provided a plurality of electrical heaters 83 which are adapted to heat primary water in the annular space 23 so as to form steam therein and the annular space 23 thus serves as an integral pressurizer positioned within the pressure vessel 3. Conduits 85, located between the walls 42 of the channel members 41, communicate with the upper portion 23 of annular space 9, and are fed by the pumps 63 to return fluid from the upper portion back through inlets 87 and downwardly between the outer surface 45 of the primary water baffle 27 and the inner wall 5.

The removable closure 19 has means for passage of control rods 89 therethrough, the rods 89 being operated by conventional means (not shown). The closure means 19 is preferably formed as a hollow lid with reinforcing beams 91 provided to strengthen the same. As illustrated in Figure 4, the small unitized reactor 3 may be enclosed in a containment 93 which has sufficient space to contain the upper reactor internal package 30 when it has been removed from the pressure vessel 3, as indicated in phantom, during performance of underwater refueling operations.

In the operation of the pressurized water reactor 1, the primary coolant is passed upwardly through the core 29 and heated thereby, the heated primary coolant continuing upward flow through the interior of the primary coolant baffle 27, and upper reactor internal package 30, and then outwardly through primary coolant passages 75 in inner wall 5 to the upper portion 23 of the annular space 9. The primary coolant, contained by partitions 77, is directed through the U-shaped heat transfer tubes 49 on the downward extending hot legs 51 or h (Figure 2) and flows through the U-shaped tubes 49 and is discharged upwardly through cold legs 55 c, and directed to the pumps 63. By heat transfer through the tubes 49, secondary coolant is heated for production of steam. The pumps 63 with impellers 59 return the primary coolant through circular openings 57 in the sealing plate 35 to conduits 85 and inlets 87, to the space between inner wall 5 and primary coolant baffle 27 for flow downwardly and then upwardly through perforated plate 31 and then further upwardly again through the core 29. The pressure within the vessel is controlled through the use of electrical heaters 83 in the upper open annular space 23 which control the amount of steam present in the pressurizer space. The pressurizer is thus an integral part of the pressure vessel 3.

Secondary coolant from the downcomer 71 enters the lower portion 39 of annular space 9 and flows downwardly between the walls 42 of channel members 41 and through perforations in the lower portion of the walls, and then flows upwardly through the compartments and around heat transfer tubes 49, with steam produced due to heat transfer from the heat transfer tubes. The steam and residual heated secondary coolant passes through steam outlet ports 65, in outer wall 5, and through riser conduits 67 to the steam drums 69. From the steam drums 69, steam is removed for use in producing electrical power, and recirculating coolant and feedwater are returned through downcomer 71 back to the lower portion 39 of annular space 9 for recycling.

The arrangement may be provided in a pressure vessel no larger than current shop manufacturing and current shipping capabilities permit. It uses a conventional pressurized water reactor system flow diagram with a steam generator heat sink above the core heat source for natural circulation, primary coolant pumps located in the cold leg for pump protection and maximum net positive suction head, a pressurizer connected to the hot leg for steam venting and reduced heater load, and a steam generator of the dry and saturated recirculating type with no preheater for reliability enhancement. The primary coolant pumps and manways to the steam generator tube sheets are located on top of the vessel to facilitate in-service inspection and maintenance. The use of the U-tube steam generator bundles facilitate access to the tube sheet and shortens the flow path between core, steam generator, and primary coolant pump. The steam generator tube sheet is very accessible for in-service inspection and tube plugging but cannot be easily removed or replaced.

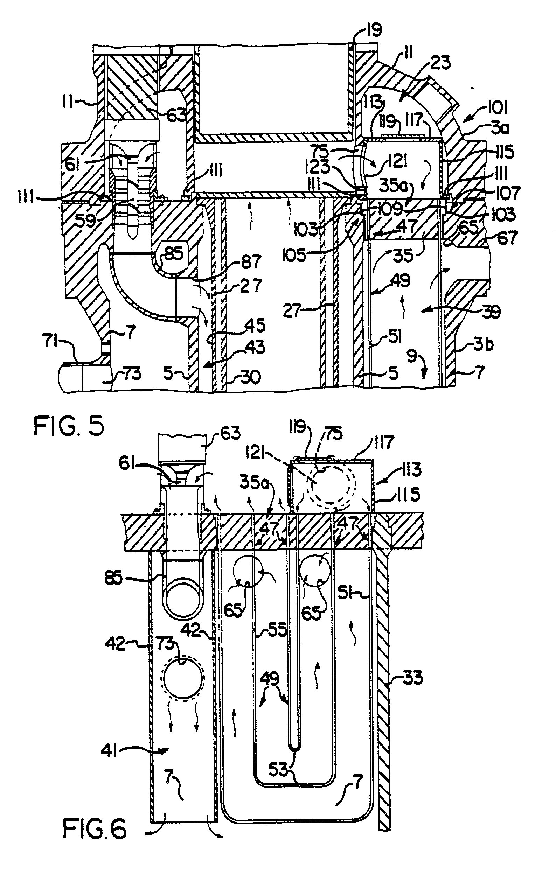

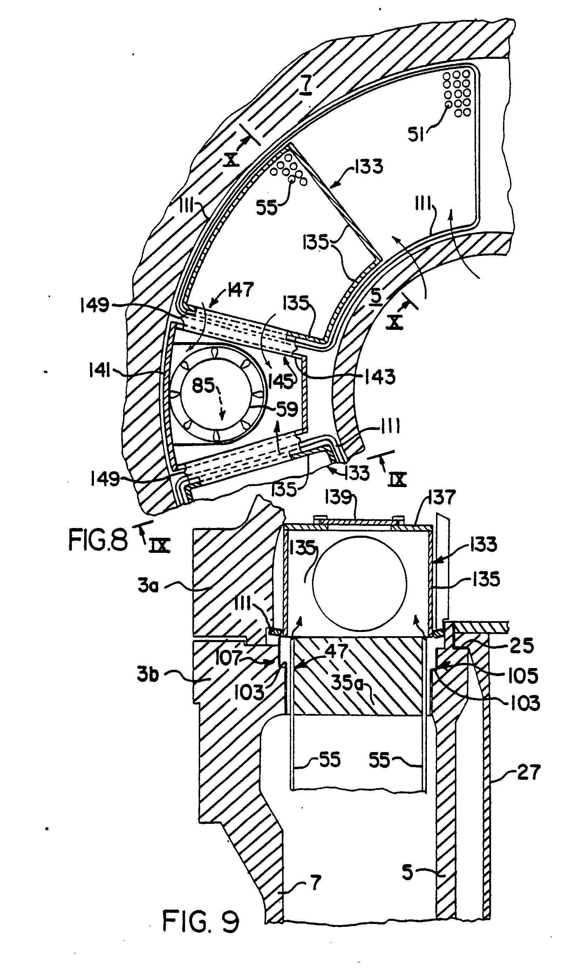

In the embodiment described, the pressurizer is an integral part of the pressure vessel 3, and the heat transfer tubes 49 and tube sheet, in the form of the sealing plate 35, are also integral and not removable from the pressure vessel 3. In the embodiments illustrated in Figures 5—11, improvements are described wherein the tube sheet and heat transfer tubes are removable for maintenance or inspection. Such an improvement is effected by forming the hollow cylindrical pressure vessel of mating upper and lower sections 3a and 3b and using an enclosure over either the hot plenum or the cold plenum of the heat transfer tube sections. In order to provide for the enclosure, the partitions 77, separator plate 79 and heaters 83 are eliminated from the upper open annular space 23.

Referring now to Figures 5 and 6, an embodiment of the present invention is described wherein an enclosure is fitted over the hot plenum of the openings of the heat transfer tubes 49. As illustrated, the reactor vessel 101 is the same as that described in Figures 1—4, except that the pressure vessel 3 is separable into two mating sections, an upper section 3a and a lower section 3b. The circular sealing plate 35 is formed from annular segments of separate tube sheets 35a which seat along facing annular shoulders 103, on the outer top wall 105 of the lower section 3b of wall 5, and the inner top wall 107 of the lower section 3b of wall 7 of the pressure vessel. The annular segments 35a are held flush against the shoulders 103 by a pair of peripheral circular springs 111, such as Belleville springs, that are provided about the periphery of the segments and held tightly against the segments by the upper section 3a, which upper section 3a is bolted to the lower section 3b. The peripheral springs 111 are provided about the periphery of the bottom walls of the upper section 3a of the pressure vessel, which springs 111 seat on the periphery of the annular segments 35a. The radially extending ends of the segments 35a and the peripheral edges thereof are then sealed by welded seals 109, preferably a J-type weld, so as to seal the upper portion 23 of the annular space 9 from the lower portion 39 thereof.

An enclosure 113 is provided, at the location of each of the passages 75 in the inner wall 5, which extends over the area of an annular segment 35a that contains the entry ports of the downwardly extending hot legs 51 of the heat transfer tubes 49, the enclosure being open at the bottom thereof, and welded to the annular segment 35a. In the embodiment where four tube bundles are provided, four such enclosures 113 are used which comprise side walls 115 and top 117, which top 117 may be provided with a removable cover 119. In the wall 115 facing the passage 75, an opening 121 is provided through the wall communicating with the passage, and a seal member 123 is used to prevent leakage of primary coolant from the passage 75 to areas outside the enclosure 113.

In operation, the hot primary coolant passing through passage 75 enters the enclosure 113 and is directed downwardly through the downwardly extending legs 51 of the heat transfer tubes 49, around the U-bend portion 53, and then upwardly through legs 55 and is discharged into the upper open annular space 23. The primary coolant is then directed by pump 63 back through the conduit 85 to the region 43 between inner wall 5 and outer surface 45 of primary coolant baffle 27.

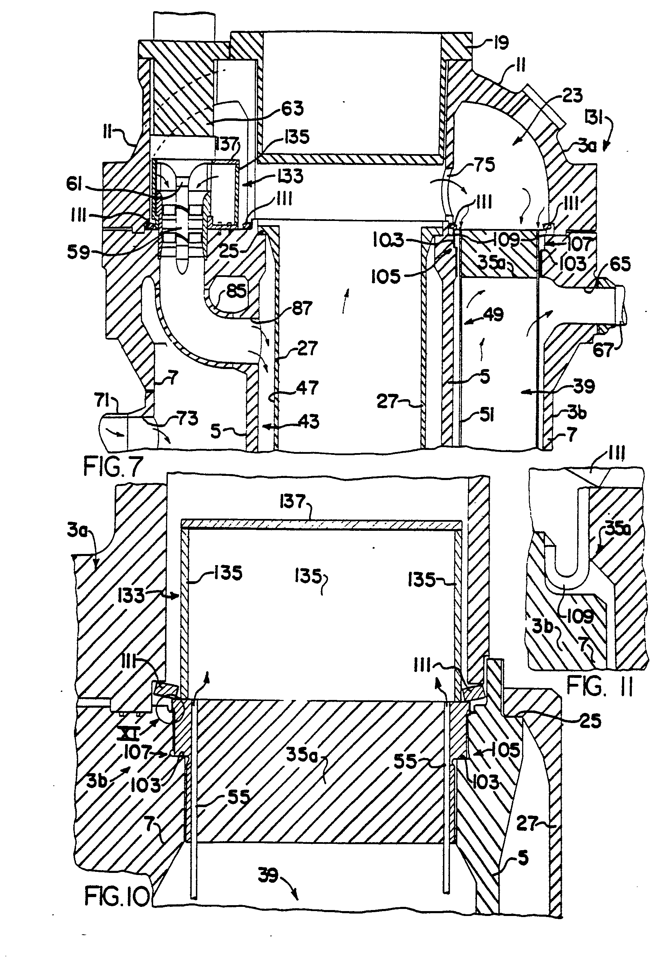

Referring now to Figures 7—10, an embodiment of the present invention is described wherein an enclosure is fitted over the cold plenum of the openings of the heat transfer tubes 49. As illustrated, the reactor vessel 131 is formed from mating sections 3a and 3b and has the features described in the embodiment of Figures 5 and 6, except that the enclosure and placement thereof is distinct. The enclosure 133, which is open at the bottom, is formed from walls 135 and top 137, and is welded to a segment 35a. A removable cover 139 may be provided in the top wall 137. The enclosure is open at the bottom thereof and extends over the area of a tube sheet segment 35a that contains the exit ports of the upwardly extending cold legs 55 of the heat transfer tubes 49. In the embodiment where four tube bundles are provided, four such enclosures 133 are used. A second enclosure 141 is provided about the circular opening 57 in the sealing plate 35 which encloses the impeller 59 and shaft 61 of the recirculating pump. In a wall 143 of the second enclosure 141 which faces the enclosure 133, an inlet port 145 is provided. In the wall 135 of the enclosure, facing the second enclosure 141, a discharge port 147 is provided. A flexible seal 149 connects the facing walls 135 and 143, about the discharge port 147 and inlet port 145. The second enclosure 141 thus serves to receive primary coolant from enclosures 133 positioned on opposite sides of the second enclosure 141.

In operation, the hot primary coolant flows through passages 75 into the open annular space 23 and flows downwardly through the downwardly extending legs 51 of the heat transfer tubes 49, around the U-bend portion 53 and upwardly through legs 55. The cooled primary coolant then is discharged from the cold legs 55 into enclosure 133. This cooled primary coolant is directed through discharge port 147, flexible seal 149, and inlet port 145 into the second enclosure 141. In the second enclosure 141, the pump 63 directs the primary coolant back through the conduit 85 to the region 43 between inner wall 5 and the outer surface 45 of primary coolant baffle 27.

The welded seal 109 used to seal the radially extending edges of the tube sheet segments 35a and the peripheral edges thereof to the inner wall 5 and outer wall 7 of the section 3b of the pressure vessel is preferably of a J-shape as illustrated in Figure 11. This type of seal is usable since the springs 111 provide most of the force necessary to tightly seat the tube sheet segments 35a, and the welded seal serves primarily to seal the upper section 23 from the lower section 38 of the annular space 9.

In the embodiments using an enclosure over either the hot leg or cold leg of the heat transfer tubes, the pressurizer with an interconnecting surge line (not shown) would be located outside the pressure vessel. By using the mating sections of the pressure vessel described, the steam generator tube bundles are easily removed or replaced.

## Claims

1. A compact unitized pressurized water nuclear reactor comprising a pressure vessel (3), a core, heat exchangers, pumps and duct structures, wherein the pressure vessel (3) is formed as a hollow cylindrical member having spaced inner and outer walls (5, 7) forming an annular hollow section (9) sealed at the top (11) and bottom (13) thereof, the inner wall (5) of said pressure vessel (3) forming an internal chamber (15) within the vessel (3); said pressure vessel further having a bottom wall (17) sealing the bottom of said internal chamber (15); a removable closure means (19) sealing the top of said internal chamber (5), said top closure means (19) being affixed to the top of said inner wall (5) and extending partially into said internal chamber (15); a core support means comprising a downwardly extending cylindrical primary coolant baffle (27) positioned within said chamber (15); the nuclear core (29) supported within said cylindrical primary coolant baffle (27) at a location spaced from said bottom wall (17); diametrically opposed dividing walls (33) are arranged between said inner and outer walls (5, 7) and extend upwardly from the bottom wall (17); diametrically opposed channel sections (41) extend between said inner and outer walls (5, 7), and have conduits (85) therein communicating between the top portion of said vessel and the chamber (15), in the region between said inner wall (5) and said cylindrical primary coolant baffle (27); said dividing walls (33) and channel sections (41) forming a plurality of vertically extending compartments (10) in said annular hollow section (9); a sealing plate (35) extends across each said compartment (10), so as to seal the top portion (23) of said annular hollow section (9) of each said compartment (10), the sealing plate (35) having U-shaped heat transfer tubes (49) which depend downwardly therefrom into the compartment (10); and a passage (75) is formed in the upper portion of said inner wall (5) to direct primary coolant from said chamber (15) downwardly through hot leg (51h) of said heat transfer tubes (49) and upwardly through cold leg (55; c) thereof, and then to said conduits (85) in the channel sections (41) for return to said chamber (15), secondary coolant being pumped through said compartments (10) and about said heat transfer tubes (49), so as to produce steam; said outer wall (7) having steam outlet ports (65) for discharge of said steam from the pressure vessel (3).

2. A pressurized water reactor as defined in claim 1, characterized in that a horizontal separator plate (79) is provided in said upper portion (23) of the annular hollow section (9), spaced from said sealing plate (35), said horizontal separator plate (79) having apertures (81) therein in the region adjacent said passage (75).

3. A pressurized water reactor as defined in claim 2, characterized in that a heater (83) is disposed in said upper portion (23) of the annular hollow section (9), above said horizontal separator plate (79).

4. A pressurized water reactor as defined in claim 1, 2 or 3, characterized in that one of the circulating pumps (63) extends into said annular hollow section (9) above said channel sections (41), said pump having an impeller structure (59) disposed in said sealing plate (35) and arranged to direct primary coolant from the upper portion (23) of the annular hollow section (9) downwardly back to said chamber (15).

5. A pressurized water reactor as defined in any of claims 1 to 4, characterized in that at least one steam drum (69) is disposed outside said vessel (3) and in communication with said compartments (10) for receiving steam therefrom and ducts (71) are provided for returning recirculation coolant and feedwater to the channel sections (41) and then to said compartments (10) in said annular hollow section (9).

6. A pressurized water reactor as defined in any of claims 1 to 5, characterized in that two pairs of diametrically opposed divider walls (42) are provided and the two diametrically opposed channel sections (41) are provided between said divider walls (42) (Fig. 2).

7. A pressurized water reactor as defined in claim 6, characterized in that four heat exchangers or steam generator compartments (10) are provided, two of them being associated with each of said opposed channel sections (41) and each having the sealing plate (35) positioned at the top end thereof.

8. A pressurized water reactor as defined in claim 7, characterized in that partition walls (77) extend from said sealing plate (35) upwardly into the upper portion (23) of the annular hollow section (9) so as to separate hot (51; h) and cold leg portions (55; c) of the U-shaped tubes (49) mounted in said sealing plate (35) and passages (75) are provided in said inner wall (5) adjacent the hot leg portions (51; h) of said sealing plate (35) so as to permit hot reactor coolant to flow through said hot legs (51; h) and to said cold leg portions (55; c), said cold leg portions being in communication with an inlet of said circulating pump (63).

9. A pressurized water reactor as defined in any of claims 1 to 8, characterized in that said hollow cylindrical vessel (3) is formed from an upper section (3a) and a lower section (3b) mated together at the location of said sealing plate (35), and said sealing plate (35) is comprised of annular segments in the form of tube sheets.

10. A pressurized water reactor as defined in claim 10, characterized in that a peripheral sealing member (111) extends about the periphery of the bottom walls of said upper section (3a) which seats on the periphery of said annular segments of said sealing plate (35).

11. A pressurized water reactor as defined in claim 10, characterized in that an enclosure (113) is positioned over the hot leg (51; h) of said heat exchanger tubes (49), said enclosure (113) having side walls (115) and a top (117) with an aperture (121) formed in the side wall (115) of said enclosure (113) adjacent said passage (75) in the upper portion of said inner wall (5), and that sealing means (111) are provided for sealing the facing wall of the enclosure (113) and said inner wall (5) about said passage (75).

12. A pressurized water reactor as defined in claim 11, characterized in that the top of said enclosure (113) is formed by a removable cover (119).

13. A pressurized water reactor as defined in claim 10, characterized in that an enclosure (133) is positioned over the cold leg (55; c) of said heat exchanger tubes (49), said enclosure (133) having side walls (135) and a top (137) enclosure (133) having an opening (147) in the side wall (135) thereof adjacent said passages (57) for the discharge of reactor coolant to said pump.

14. A pressurized water reactor as defined in claim 13, characterized in that a removable cover (139) is disposed on top of said enclosure (133) (Fig. 9).

## Patentansprüche

1. Als Kompakteinheit ausgebildeter Druckwasser-Kernreaktor mit einem Druckbehälter (3), einem Reaktorkern, Wärmeaustauschern, Pumpen und Leitungen, wobei der Druckbehälter (3) als hohles zylindrisches Bauteil mit beabstandeten inneren und äußeren Wänden (5, 7) ausgebildet ist, die einen am oberen (11) und unteren (13) Ende abgeschlossenen ringförmigen Hohlraum (9) bilden, wobei die innere Wand (5) des Druckbehälters (3) eine innere Kammer (15) innerhalb des Druckbehälters (3) bildet, wobei weiter der Druckbehälter eine die innere Kammer (15) an ihrem unteren Ende abschließende Bodenwand (17) aufweist und ein abnehmbarer Deckel (19) das obere Ende der inneren Kammer (15) abschließt und dieser Deckel (19) am oberen Ende der inneren Wand (5) befestigt ist und teilweise in die innere Kammer (15) hineinragt, wobei ferner eine Reaktorkernabstützung ein innerhalb der Kammer (15) angeordnetes, nach unten ragendes zylindrisches Primärkühlmittelleitrohr (27) aufweist und der Reaktorkern (29) innerhalb dieses zylindrischen Primärkühlmittelleitrohrs (27) an einer von der Bodenwand (17) beabstandeten Stelle abgestützt ist, wobei weiterhin diametral gegenüberliegende Trennwände (33) zwischen den inneren und äußeren Wänden (5, 7) angeordnet sind und von der Bodenwand (17) nach oben verlaufen sowie diametral gegenüberliegende Schächte (41) zwischen den inneren und äußeren Wänden (5, 7) verlaufen und Leitungen (85) aufnehmen, die zwischen dem oberen Teil des Behälters und dem Bereich der Kammer (15) zwischen der inneren Wand (5) und dem zylindrischen Primärkühlmittelleitrohr (27) verlaufen, und wobei die Trennwände (33) und die Schächte (41) eine Mehrzahl von vertikal verlaufenden Kammern (10) in dem ringförmigen Hohlraum (9) bilden und eine Verschlußplatte (35) über jeder der Kammern verläuft, um den oberen Teil (23) des ringförmigen Hohlraums (9) im Bereich jeder der Kammern (10) abzuschließen, wobei fernerhin die Verschlußplatte (35) U-förmige Wärmetauschrohre (49) aufweist, die davon nach unten in die Kammern (10) hineinragen, und wobei im oberen Teil der inneren Wand (5) ein Kanal (75) gebildet ist, um Primärkühlmittel aus der Kammer (15) abwärts durch einen heißen Zweig (51h) der Wärmetauschrohre (49) und nach oben durch deren kalten Zweig (55c) und sodann zu den Leitungen (85) in den Schächten (41) zwecks Rückführung in die Kammer (15) zu leiten, während Sekundärkühlmittel durch die Kammern um die Wärmetauschrohre (49) herum gepumpt wird, um Dampf zu erzeugen, zu dessen Austritt aus dem Druckbehälter (3) die äußere Wand (7) Dampfauslaßöffnungen (65) aufweist.

2. Druckwasserreaktor nach Anspruch 1, dadurch gekennzeichnet, daß eine horizontale Abscheiderplatte (79) im oberen Teil (23) des ringförmigen Hohlraums (9) im Abstand von der Verschlußplatte (35) angeordnet sind, die im Bereich nahe dem Kanal (75) Öffnungen (81) aufweist.

3. Druckwasserreaktor nach Anspruch 2, dadurch gekennzeichnet, daß im oberen Teil (23) des ringförmigen Hohlraums (9) oberhalb der horizontalen Abscheiderplatte (79) ein Heizgerät (83) angeordnet ist.

4. Druckwasserreaktor nach Anspruch 1, 2 oder 3, dadurch gekennzeichnet, daß eine der Umwälzpumpen (63) in den ringförmigen Hohlraum (9) oberhalb der Schächte (41) hineinragt und ein in der Verschlußplatte (35) untergebrachtes Laufrad (59) aufweist, um Primärkühlmittel aus dem oberen Teil (23) des ringförmigen Hohlraums (9) zurück in die Kammer (15) zu befördern.

5. Druckwasserreaktor nach einem der Ansprüche 1 bis 4, dadurch gekennzeichnet, daß mindestens eine Dampftrommel (69) außerhalb des Druckbehälters (3) und in Verbindung mit den Kammern (10) zur Aufnahme von Dampf angeordnet ist und daß Leitungen (71) zum Rückleiten von rezirkulierendem Kühlmittel und von Speisewasser in die Schächte (41) und dann in die Kammern (10) des ringförmigen Hohlraums (9) vorgesehen sind.

6. Druckwasserreaktor nach einem der Ansprüche 1 bis 5, dadurch gekennzeichnet, daß zwei Paar diametral gegenüberliegender Trennwände (42) und zwei diametral gegenüberliegende Schächte (41) zwischen den Trennwänden (42) vorgesehen sind (Fig. 3).

7. Druckwasserreaktor nach Anspruch 6, dadurch gekennzeichnet, daß vier Wärmeaustauschdampferzeugerkammern (10) vorgesehen sind, wobei jedem der gegenüberliegenden Schächte (41) jeweils zwei davon zugeordnet sind und an deren oberem Ende sich jeweils die Verschlußplatte (35) befindet.

8. Druckwasserreaktor nach Anspruch 7, dadurch gekennzeichnet, daß Trennwände (77) von der Verschlußplatte (35) nach oben in den oberen Teil (23) des ringförmigen Hohlraums (9) verlaufen, um heiße (51h) und kalte (55c) Zweige der in der Verschlußplatte (35) montierten U-förmigen Rohre (49) zu trennen, und daß Kanäle (75) in der inneren Wand (5) angrenzend an die heißen Zweige vorgesehen sind, um heißes Reaktorkühlmittel durch die heißen Zweige (51h) und zu den kalten Zweigen (55c) strömen zu lassen, wobei die kalten Zweige mit einem Einlaß der Umwälzpumpe (63) in Verbindung stehen.

9. Druckwasserreaktor nach einem der Ansprüche 1 bis 8, dadurch gekennzeichnet, daß der hohle zylindrische Druckbehälter (3) aus einem oberen Abschnitt (3a) und einem unteren Abschnitt (3b) hergestellt ist, die an der Stelle der Verschlußplatte (35) zusammengefügt sind, und daß die Verschlußplatte (35) aus rohrbodenartigen Ringsegmenten zusammengesetzt ist.

10. Druckwasserreaktor nach Anspruch 9, dadurch gekennzeichnet, daß ein umfangsmäßiges Dichtungselement (111) um den Umfang der Bodenwände des oberen Abschnitts (3a) verläuft, der auf den Umfang der Ringsegmente der Verschlußplatte (35) aufsitzt.

11. Druckwasserreaktor nach Anspruch 10, dadurch gekennzeichnet, daß über dem heißen Zweig (51h) der Wärmetauschrohre (49) ein Mantel (113) mit Seitenwänden (115) und einer Deckwand (117) angeordnet ist, wobei in der Seitenwand (115) des Mantels (113) neben dem Kanal (75) im oberen Teil der inneren Wand (5) eine Öffnung (121) gebildet ist, und daß Dichtungsmittel (111) zum Abdichten zwischen der inneren Wand (5) und der angrenzenden Wand des Mantels (113) um den Kanal (75) herum vorgesehen sind.

12. Druckwasserreaktor nach Anspruch 11, dadurch gekennzeichnet, daß die Deckwand des Mantels (113) durch einen abnehmbaren Deckel (119) gebildet ist.

13. Druckwasserreaktor nach Anspruch 10, dadurch gekennzeichnet, daß über dem kalten Zweig (55c) der Wärmetauschrohre (49) ein Mantel (133) mit Seitenwänden (135) und einer Deckwand (137) angeordnet ist, der eine Öffnung (147) in der Seitenwand (135) neben den Kanälen (57) für den Austritt von Reaktorkühlmittel zur Pumpe aufweist.

14. Druckwasserreaktor nach Anspruch 13, dadurch gekennzeichnet, daß der abnehmbare Deckel (139) auf dem oberen Ende des Mantels (133) angeordnet ist (Fig. 9).

**Revendications**

1. Réacteur nucléaire compact unifié à eau sous pression comprenant une cuve (3) sous pression, un coeur, des structures à échangeurs de chaleur, pompes et conduits, dans lequel la cuve (3) sous pression se présente sous la forme d'un élément cylindrique creux ayant des parois intérieure et extérieure (5, 7) espacées qui forment une partie annulaire creuse (9) étanche au niveau de son sommet (11) et de son fond (13), la paroi intérieure (5) de ladite cuve (3) sous pression formant une chambre intérieure (15) dans la cuve (3); ladite cuve sous pression ayant en outre une paroi inférieure (17) qui ferme hermétiquement le fond de ladite chambre intérieure (15); un moyen de fermeture amovible (19) fermant hermétiquement le haut de ladite chambre intérieure (5), ledit moyen de fermeture supérieur (19) étant fixé en haut de ladite paroi intérieure (5) et s'étendant partiellement jusque dans ladite chambre intérieure (15); un moyen de support de coeur comprenant un déflecteur cylindrique (27) pour fluide primaire de refroidissement s'étendant vers le bas disposé à l'intérieur de ladite chambre (15); le coeur nucléaire (29) supporté dans ledit déflecteur cylindrique (27) pour fluide primaire de refroidissement à un endroit espacé de ladite paroi inférieure (17); des cloisons (33) diamétralement opposées, disposées entre lesdites parois intérieure et extérieure (5, 7) et s'étendant vers le haut depuis la paroi inférieure (17); des profilés en U (41) diamétralement opposés, s'étendant entre lesdites parois intérieure et extérieure (5, 7) et pourvus intérieurement de conduits faisant communiquer la partie supérieure de ladite cuve et la chambre (15), dans la région comprise entre ladite paroi intérieure (5) et ledit déflecteur cylindrique (27) pour fluide primaire de refroidissement; lesdites cloisons (33) et lesdits profilés en U (41) formant une pluralité de compartiments (10) s'étendant verticalement dans ladite partie annulaire creuse (9); une plaque d'étanchéité (35) s'étendant en travers de chacun desdits compartiments (10) de façon à rendre étanche la partie supérieur (23) de ladite partie annulaire creuse (9) de chacun desdits compartiments (10), la plaque d'étanchéité (35) ayant des tubes (49) de transfert de chaleur en forme de U suspendus vers le bas depuis celle-ci jusque dans le compartiment (10); et un passage (75) étant formé dans la partie supérieure de ladite paroi intérieure pour diriger le fluide primaire de refroidissement issu de ladite chambre (15) vers le bas via la branche chaude (51; h) desdits tubes (49) de transfert de chaleur et vers le haut via la branche froide (55; c) de ceux-ci, puis jusqu'auxdits conduits (85) des profilés (41) en U pour le retour jusqu'à ladite chambre (15), le fluide secondaire de refroidissement étant pompé à travers lesdits compartiments (10) et autour desdits tubes (49) de transfert de chaleur afin de produire de la vapeur, ladite paroi extérieure (7) ayant des orifices (65) de sortie de vapeur pour le refoulement de ladite vapeur depuis la cuve (3) sous pression.

2. Réacteur à eau sous pression selon la revendication 1, caractérisé en ce qu'une plaque séparatrice horizontale (79) est présente dans ladite partie supérieure (23) de la partie annulaire creuse (9), à distance de ladite plaque d'étanchéité (35), ladite plaque séparatrice horizontale (79) possédant des ouvertures (81) dans la région contiguë audit passage (75).

3. Réacteur à eau sous pression selon la revendication 2, caractérisé en ce qu'un réchauffeur (83) est disposé dans ladite partie supérieure (23) de la partie annulaire creuse (9), au-dessus de ladite plaque séparatrice horizontale (79).

4. Réacteur à eau sous pression selon la revendication 1, 2 ou 3, caractérisé en ce qu'une des pompes de circulation (63) s'étend jusque dans ladite partie annulaire creuse (9) au-dessus desdits profilés (41) en U, ladite pompe ayant une structure formant roue à palettes (59) disposée dans ladite plaque d'étanchéité (35) et conçue pour diriger le fluide primaire de refroidissement depuis la partie supérieure (23) de la partie annulaire creuse (9) vers le bas pour le reconduire jusque dans ladite chambre (15).

5. Réacteur à eau sous pression selon l'une quelconque des revendications 1 à 4, caractérisé en ce qu'au moins un ballon (69) de vapeur est disposé à l'extérieur de ladite cuve et en communication avec lesdits compartments (10) pour recevoir la vapeur issue de ceux-ci, et des conduits (71) sont prévus pour reconduire le caloporteur de recirculation et l'eau d'alimentation jusqu'aux profilés en U (41), puis jusqu'auxdits compartiments (10) de ladite partie annulaire creuse (9).

6. Réacteur à eau sous pression selon l'une quelconque des revendications 1 à 5, caractérisé en ce que deux paires de cloisons (42) diamétralement opposées sont présentes, et les deux profilés en U (41) diamétralement opposés sont présents entre lesdites cloisons (42) (Fig. 2).

7. Réacteur à eau sous pression selon la revendication 6, caractérisé en ce que quatre échangeurs de chaleur ou compartiments (10) de générateur de vapeur sont présents, deux d'entre eux étant associés à chacun desdits profilés en U opposés (41) et chacun ayant la plaque d'étanchéité (35) disposée à son extrémité supérieure.

8. Réacteur à eau sous pression selon la revendication 7, caractérisé en ce que des parois de cloisonnement (77) s'étendent depuis ladite plaque d'étanchéité (35) vers le haut jusque dans la partie supérieure (23) de la partie annulaire creuse (9) de façon à séparer les parties formant branches chaude (51; h) et froide (55; c) des tubes en forme de U (49) montés dans ladite plaque d'étanchéité (35), et des passages (75) sont présents dans ladite paroi intérieure (5) de façon contiguë aux parties formant branches chaudes (51; h) de ladite plaque d'étanchéité (35) de façon à permettre au fluide de refroidissement de réacteur chaud de circuler dans lesdites branches chaudes (51; h) et jusqu'auxdites parties formant branches froides (55; c), lesdites parties formant branches froides communiquant avec une entrée de ladite pompe de circulation (63).

9. Réacteur à eau sous pression selon l'une quelconque des revendications 1 à 8, caractérisé en ce que ladite cuve cylindrique creuse (3) est formée à partir d'une partie supérieure (3a) et d'une partie inférieure (3b) unies l'une à l'autre à l'emplacement de ladite plaque d'étanchéité, et ladite plaque d'étanchéité (35) est composée de segments annulaires sous la forme de plaques tubulaires.

10. Réacteur à eau sous pression selon la revendication 9, caractérisé en ce qu'un élément périphérique d'étanchéité (111) s'étend sur la périphérique des parois inférieures de ladite partie supérieure (3a) qui repose sur la périphérie desdits segments annulaires de ladite plaque d'étanchéité (35).

11. Réacteur à eau sous pression selon la revendication 10, caractérisé en ce qu'une enceinte (113) est placée sur la branche chaude (51; h) desdits tubes (49) formant échangeur de chaleur, ladite enceinte (113) ayant des parois latérales (115) et un dessus (117) avec une ouverture (121) formée dans la paroi latérale (115) de ladite enceinte (113) de manière contiguë audit passage (75) présent dans la partie supérieure de ladite paroi intérieure (5), et en ce que des moyens d'étanchéité (111) sont présents pour rendre étanche la paroi frontale de l'enceinte (113) et ladite paroi intérieure (5) autour dudit passage (75).

12. Réacteur à eau sous pression selon la revendication 11, caractérisé en ce que le dessus de ladite enceinte (113) est formé par une pièce de recouvrement amovible (119).

13. Réacteur à eau sous pression selon la revendication 10, caractérisé en ce qu'une enceinte (133) est placée sur la branche froide (55; c) desdits tubes (49) formant échangeur de chaleur, ladite enceinte (133) ayant des parois latérales (135) et un dessus (137), l'enceinte (133) ayant une ouverture (147) dans sa paroi latérale (135) de manière contiguë auxdits passages (57) servant à refouler le fluide de refroidissement du réacteur jusqu'à ladite pompe.

14. Réacteur à eau sous pression selon la revendication 13, caractérisé en ce qu'une pièce de recouvrement amovible (139) est disposée sur le dessus de ladite enceinte (133) (Fig. 9).

FIG. I

EP 0 164 525 B1

FIG. 2

FIG. 3

FIG. 4

2

FIG. 5

FIG.6

EP  0 164 525  B1

FIG.7

FIG.10

FIG. 11

4

FIG.8

FIG. 9